# EUROPEAN PATENT SPECIFICATION

(11) **EP 3 328 183 B1**
(45) Date of publication and mention of the grant of the patent: **06.05.2020**
(21) Application number: 16751350.6
(22) Date of filing: 22.07.2016
(51) Int. Cl.: A01B 33/02

(54) **A SELF-PROPELLING MACHINE**
SELBSTANGETRIEBENE MASCHINE
UNE MACHINE AUTOMOTRICE

(30) Priority: 28.07.2015 IT UB20152530
(43) Date of publication of application: 06.06.2018
(73) Proprietor: Eurosystems S.p.A., 42045 Luzzara (Reggio Emilia) (IT)
(72) Inventor: BOVI, Fabio, I-42045 Luzzara (RE) (IT)
(74) Representative: Corradini, Corrado
(86) International application number: PCT/IB2016/054384
(87) International publication number: WO 2017/017576

(56) References cited:
- US-A- 4 036 321
- US-A- 5 644 903
- US-A1- 2005 183 409
- US-A1- 2013 175 105

## Description

### TECHNICAL FIELD

The present invention relates to a self-propelling machine, for example a single-axis machine.

In particular the invention relates to an actuating group of a steering and selection of a movement direction for a single-axis self-propelling machine for prevalently agricultural use guided by a person who is walking.

### PRIOR ART

As is known, in particular in the agricultural and gardening sector use is widely made of single-axis self-propelling machines, such as for example motor mowers, hoes or cultivators, provided with a frame to which an internal combustion engine is associated, connected to a power take-off for a tool. The frame is further supported by a pair of wheels to each of which a motor is connected for actuating the wheel, and a manoeuvring organ of the machine such as for example a pair of handlebars or a handlebar manoeuvred by a man who is generally on foot posteriorly of the machine.

In known self-propelling machines, the handlebar is generally fixed, in use, solidly to the frame.

To exert the steering effect the operator must generally perform a levering action on the handlebars or activate one or more levers present on the handlebars so as to block one of the wheels and perform a rotation of the machine on the stationary wheel.

The activating of the steering lever with the hands does not enable the operator to actuate other commands during the steering steps and makes the machine difficult to manoeuvre. A machine in accordance with the preamble of claim 1 is known from the document US-A-4 036 321.

An aim of the present invention is to obviate the above-mentioned drawbacks in the prior art, with a solution that is simple, rational and relatively inexpensive.

The aims are attained by the characteristics of the invention as reported in the independent claim. The dependent claims delineate preferred and/or particularly advantageous aspects of the invention.

### DESCRIPTION OF THE INVENTION

The invention relates to a self-propelling machine comprising the features of claim 1.

With this solution, the actuating group enables controlling both the advancement trajectory (i.e. performing steering operations) and the advancing group of the machine (i.e. switching from the forward to the reverse movement).

The actuating group further enables modifying the advancement trajectory of the machine by a simple movement along the first degree of freedom without the operator having to use his fingers, which can then be used to actuate other commands of the machine.

In a further aspect of the invention, the first body is oscillatingly associated to the frame with respect to a first oscillating axis, and the second body is oscillatingly associated to the first body with respect to a second oscillating axis.

In this way, the actuating group enables varying the advancement direction by a simple oscillating movement with respect to an oscillating axis of the handlebars, which movement is particularly easy and intuitive for the user and enables reducing the effort the user has to make.

Further, by the independent action of a different but also simple reciprocal oscillation between the first and the second body, the actuating group enables slowing the advancement or changing the advancement direction of the machine.

In a further aspect of the invention, the first and the second oscillating axis are substantially perpendicular to one another.

In this way, the actuating group is easy to realise and use.

In a further aspect of the invention, the second body is connected to each control lever by means of a respective hinged arm each having a first end hinged to the second body and a second end hinged to a respective control lever, for transfer to the control levers of movement relative to the frame of the first and/or the second body.

In this way, the movement of the actuating group along the degrees of freedom thereof are effectively switched in the movements enabled for each of the control levers of the actuators, necessary for carrying out the inversions of direction and/or advancement trajectory by using elements that are simple and economical to make.

Further, each hinged arm comprises a first portion, provided with the first end, a second portion provided with the second end, and comprises an intermediate portion hinged to the free end of the first and second portion, the intermediate portion being hinged to the frame with respect to an oscillating axis in an intermediate point between the hinge points with the first and the second portion.

In this way, the hinged arms are simple to design and realise and enable effectively transforming the movements of the first and second body of the actuating group with respect to the respective degrees of freedom with respect to the frame in the controlled actuating of the control levers.

In a further aspect of the invention the first body comprises a cylindrical seating able to be inserted rotatably on a stem having a vertical axis solidly constrained to the frame, the second body being oscillatingly associated to the first body by means of at least a pin having an axis perpendicular to the axis of the stem.

With this solution, the actuating group is easy and economical to realise.

In a further aspect of the invention, the frame comprises two opposite endrun elements selectively able to enter into contact with a stop element solidly constrained to the first body for defining respective stop positions of the first body with respect to the frame.

With this solution, the limitation of the run of the first body enables improving the manoeuvrability and control of the machine.

In a further aspect of the invention, the actuating group comprises an elastic recall element associable to the frame and to the first body and in which the first body is mobile with respect to the frame from a rest position towards a first and a second operating position in opposition to the action of the recall element, the rest position being interposed between the first and the second operating position along the trajectory of the first body with respect to the frame.

In this way, the recall element enables the actuating group to return automatically into the rest position so as to enable the machine to resume a straight advancement direction on release of the handlebars by the operator. Further, the machine of the invention comprises a handlebar (for example a pair of handlebars) fixed to the first body and solidly constrained thereto with respect to the first degree of freedom.

In this way the operator can easily grip the free ends of the handlebar and manoeuvre it with respect to the frame in order to vary the advancement trajectory of the machine.

Further, the machine comprises manoeuvring means able to activate the second body in movement with respect to the first body.

In this way the operator can modify as desired the advancement direction of the machine and the advancement velocity in each direction thereof.

In a further aspect of the invention, the manoeuvring means comprise a manoeuvring lever associated to the handlebar and a pair of manoeuvring cables, each provided with a first end associated to the manoeuvring lever and a second end associated to the second body.

In this way, the actuating of the second body with respect to the first body is realised simply, effectively and economically, and is operable by the operator using his or her fingers.

### BRIEF DESCRIPTION OF THE DRAWINGS

Further characteristics and advantages of the invention will emerge from a reading of the following description, provided by way of non-limiting example with the aid of the figures illustrated in the appended tables of drawings.

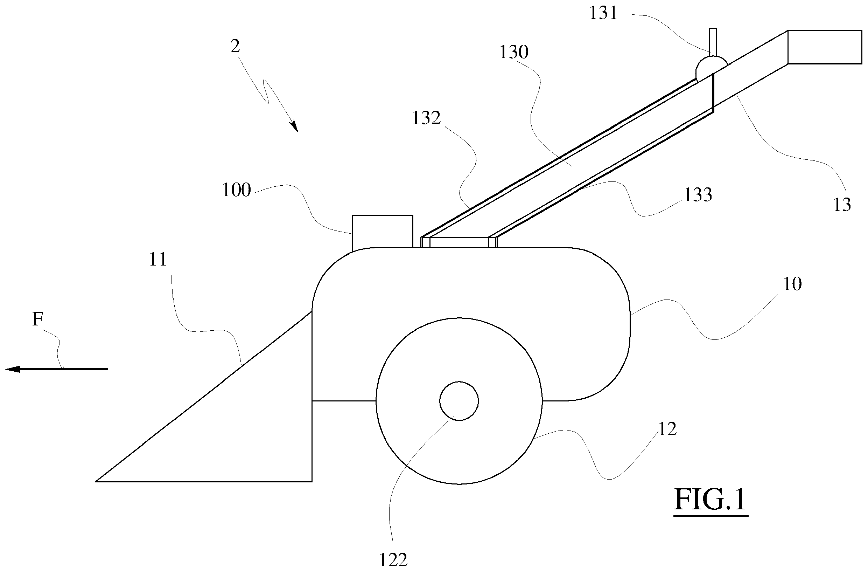

Figure 1 is a schematic lateral view of the self-propelling machine.

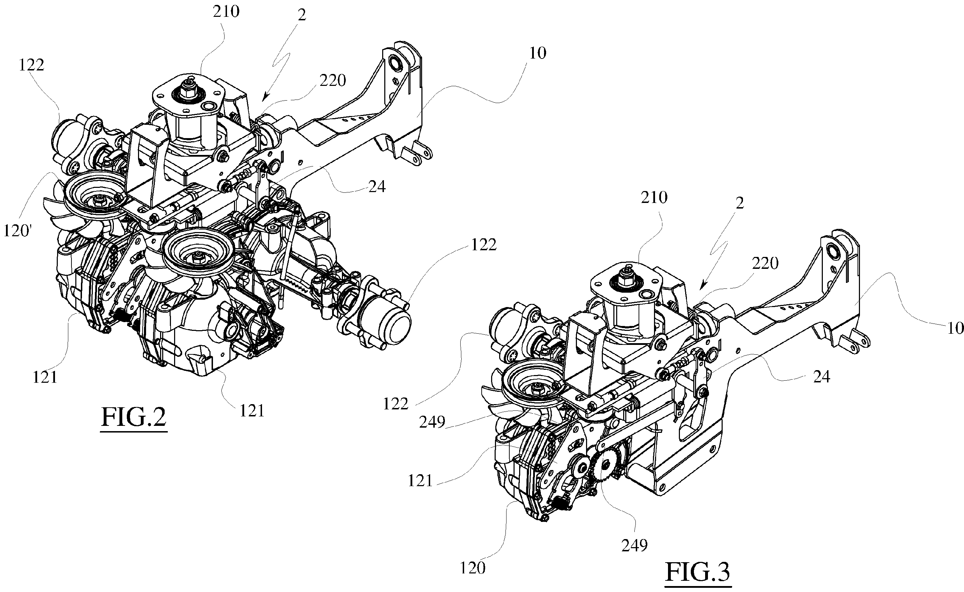

Figure 2 is an axonometric view of a steering actuating group of the machine of the invention, connected to a pair of actuators and in a rest configuration.
Figure 3 is an axonometric view of the steering actuating group of figure 2, wherein one of the two actuators has been removed so as to improve the visibility of the actuating group.

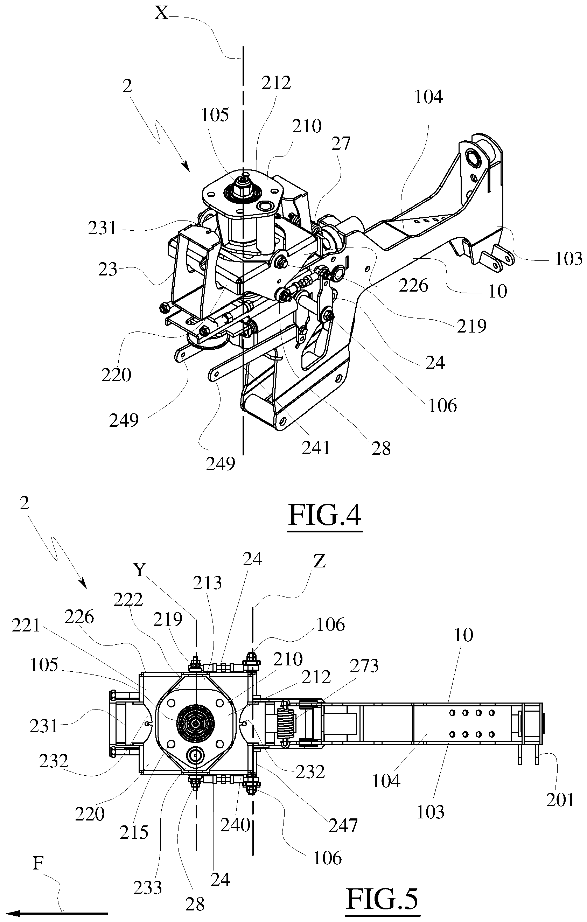

Figure 4 is an axonometric view of only the steering actuating group of figure 3.
Figure 5 is a plan view of only the steering actuating group of figure 4.

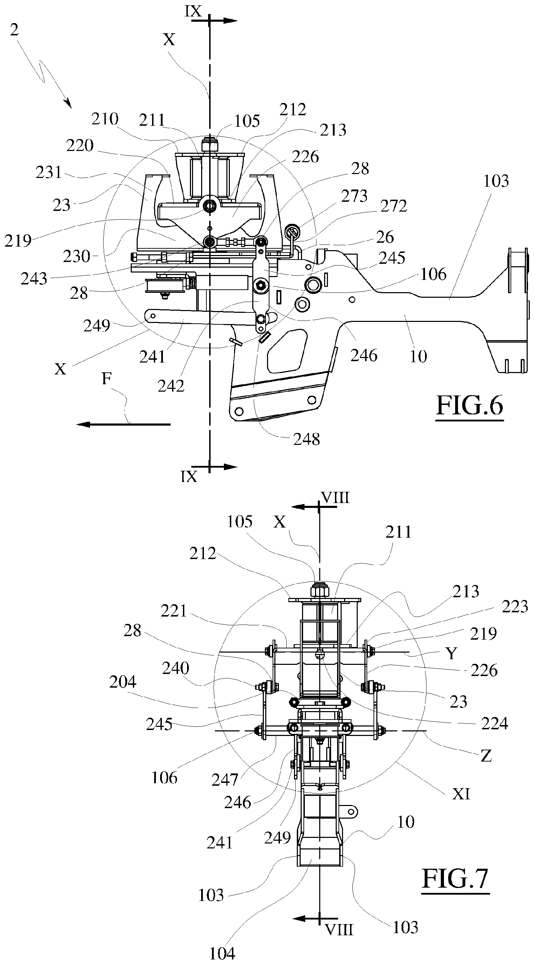

Figure 6 is a lateral view of only the steering actuating group of figure 4.
Figure 7 is a frontal view of only the steering actuating group of figure 4.
Figure 8 is a section along plane VIII-VIII of figure 7.
Figure 9 is a section along plane XI-XI of figure 6.

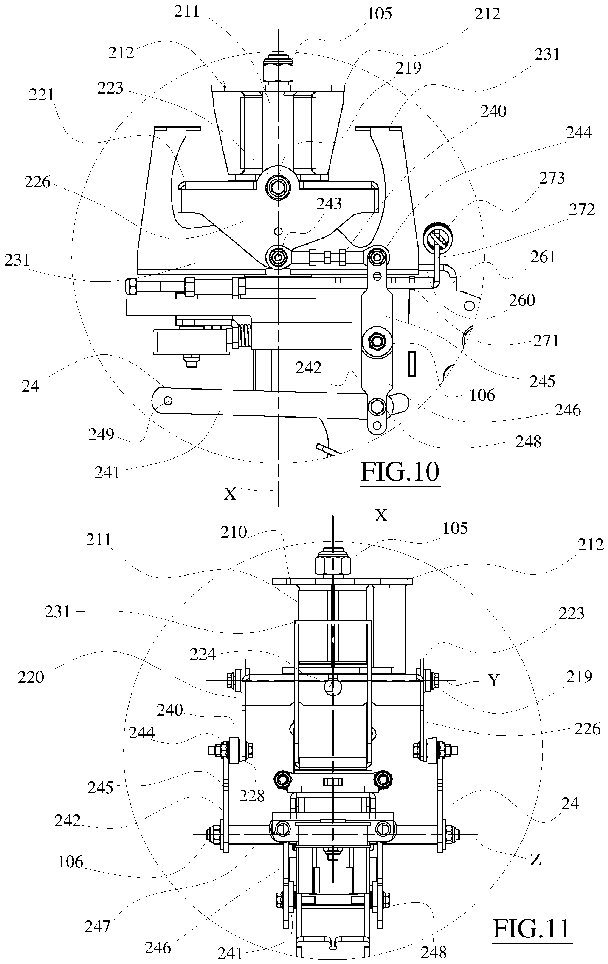

Figure 10 is a larger-scale view of detail X of figure 6.
Figure 11 is a larger-scale view of detail XI of figure 7.
Figure 12 is a view from above of the steering actuating group only of figure 2 in a first operative steering configuration.
Figure 13 is a lateral view of the steering actuating group only of figure 3 in a second operative advancing configuration.
Figure 14 is a lateral view of the steering actuating group only of figure 3 in a third operative advancing configuration.

### BEST WAY OF CARRYING OUT THE INVENTION

With particular reference to the figures, 1 denotes in its entirety a self-propelling machine, for example single-axis, for example a motor hoe, a motor plough or a motor mower, activatable for example by a man walking on the ground.

The machine 1 comprises a support frame 10 of a motor 100, for example an internal combustion motor, connected by a power take-off to a tool 11 such as for example a cutter or a hoe.

The frame 10 develops substantially along a longitudinal extension parallel to an advancement direction F of the machine 1 and comprises for example two opposite lateral flanks 103, separate and reciprocally distanced by transversal elements 104.

The frame 10 comprises a cylindrical stem 105 projecting superiorly and vertically from the frame 10, for example with respect to the upper edges of the lateral flanks 103 and in particular in proximity of a front portion of the frame 10.

The cylindrical stem 105 is for example interposed between the lateral flanks 103.

The cylindrical stem 105 is provided with a lower end solidly fixed to the frame 10, for example to a transversal element 104 and an opposite free upper end.

Further, the frame 10 comprises a pair of cylindrical shanks 106 which extend substantially projectingly and horizontally from the lateral flanks 103.

The cylindrical shanks 106 can constitute the end portions of a single cylindrical stem through-inserted in a special cylindrical seating fashioned in the frame 10.

In particular, each cylindrical shank 106 is provided with a base end fixed solidly to a respective lateral flank 103 of the frame 10 and an opposite free end arranged externally and projectingly with respect to the lateral flank.

Further, the cylindrical shanks 106 are arranged coaxially to one another and opposite with respect to the longitudinal axis of the frame 10.

The machine 1 further comprises a pair of actuators 120, associated to the frame 10, each provided with a respective hub 122 and each able to support and actuate in rotation a respective wheel 12 keyed on the respective hub 122.

The hubs 122 are arranged coaxially to one another and horizontally so that the wheels 12 are coaxial and lying on parallel planes to the advancement direction F.

Obviously the wheels 12, apart from defining a rest on the ground for the machine 1, enable advancing the machine.

Each actuator 120 preferably comprises a hydrostatic unit which, as well known to the expert in the sector, is provided with a hydraulic pump and a hydraulic motor connected to one another so that the actuating of the hydraulic pump, drawn by the motor 100 of the machine 1, by means of a belt connection of which only one driven pulley 120' is shown, enables actuating the hydraulic motor which in turn actuates the rotation of the support hub 122 of the respective wheel 12.

The rotation of each hub 122 and consequently the respectively wheel 12 depends on the rotation of the motor of the machine 1.

Each actuator 120 is provided with a transmission comprising a control lever 121 hinged to the casing of the respective actuator 120, enabling a regulating of the rotation velocity of the respective hub 122 and further enabling an inversion of the rotation of the respective hub 122.

The control lever 121 of the transmission is able to perform a rotation with respect to a rotation axis parallel for example to the rotation axis of the respective hub 122, from a neutral position to two opposite end positions along a first and a second arc of circumference.

A nil rotation of the respective hub 122 corresponds to the neutral position of each control lever 121, a maximum rotation velocity of the respective hub 122 corresponds to each end position, and a rotation velocity of the intermediate hub 1222 corresponds to each intermediate position between the neutral position and one of the end positions.

The rotation of each control lever 121 from the neutral position thereof towards one of the end positions enables actuating the rotation of the respective hub 122 in a respective movement direction.

For example the rotation of the control lever towards the first end position (i.e. the front position with respect to the frame 10) from the neutral position, corresponds to the forward movement of the machine 1, while the rotation of the control lever towards the second end position (i.e. the rear position with respect to the frame 10) from the neutral position, corresponds to the rearwards motion of the machine).

The actuators 120 are not an object of the present invention and are also well known to the expert in the sector, and will therefore not be described in further detail herein.

The machine 1 further comprises a control organ, for example a handlebar 13 (or a solidly-constrained pair of handlebars), which the operator can grip with his/her hands, for orientating and controlling the direction of the machine.

As will more clearly be expressed in the following, the handlebars 13 are advantageously rotatably associated to the frame 10 and in particular are oscillatingly associated with respect to a vertical oscillating axis X.

The handlebars 13 each have an end constrained to the frame 10 and an opposite free end able to define a grip for the operator.

A manoeuvring lever 131 can be associated to one or both the handlebars 13, for example hinged to the handlebar itself in proximity of the free gripping end.

A first and a second manoeuvring cable 132,133 (for example a Bowden cable) are connected to the lever 131.

In particular, the manoeuvring lever 131 is connected to the manoeuvring cables 132,133 so that by actuating the manoeuvring lever 131 in a rotation direction the first manoeuvring cable 132 is actuated in traction and the pull of the second manoeuvring cable 133 is released by the same quantity, and by actuating the manoeuvring lever 131 in an opposite rotation direction the second manoeuvring cable 133 is actuated in traction and the pull of the first manoeuvring cable 132 is released by the same quantity.

In particular, the machine 1 comprises an actuating group 2 for actuating the control levers 121.

The actuating group 2 is associated to the frame 10 and is connected contemporaneously to the handlebars 13 and the control levers 121.

The actuating group 2 further comprises a first body 210 associated oscillatingly to the frame 10 and in particular oscillatingly with respect to an oscillating axis coinciding with the vertical rotation axis X of the handlebars 13 with respect to the frame 10.

In particular, the first body 210 is solidly fixed to the handlebar 13.

The first body 210 comprises a cylindrical seating, for example defined by a cylindrical sleeve 211, for example inserted on the cylindrical stem 105 of the frame 10 so that the first body 210 can oscillate about the vertical oscillating axis X defined by the cylindrical stem 105.

The cylindrical sleeve 211 is advantageously able to insert on the cylindrical stem 105 by interposing bearings which enable oscillation thereof with respect to the vertical oscillating axis X without axial de-insertion.

The first body 210 further comprises an upper plate 212 and a lower plate 213 solidly constrained to the cylindrical sleeve 211 and fixed thereto respectively at the upper end and the lower end of the cylindrical sleeve 211.

The upper and lower plate 212,213 lie on parallel planes that are horizontal and distanced from one another by an equal distance to the longitudinal length of the cylindrical sleeve 211 and can be connected to one another by substantially straight bars fixed to the plates 212,213 at the ends thereof and able to stiffen the first body 210.

The upper plate 212 comprises through-holes 215 enabling insertion of the fixing means, of known type and not illustrated, such as screws or bolts which constrain the handlebars 13 (for example the constrained ends thereof) to the first bar 210.

The first body 210 further comprises a cradle 23 conformed substantially in a U-shape and having an intermediate part 230, arranged horizontally and inferiorly of the lower plate 210, and two end parts 231 (respectively front and rear) rising from the intermediate part 230 the ends of which are arranged, for example, at an intermediate height between the upper and lower plates 212,213 of the first body 210.

Each end part 231 of the cradle 23 comprises, at the free end thereof, a through-slot 233 (transversally open) for the axial retaining of the end of the cable sheath of one of the manoeuvring cables 132,133.

The intermediate part 230 of the cradle 23 comprises a cylindrical seating 232, able to rotatably insert on the cylindrical stem 105 of the frame 10 by means of the interposing of bearings so that the cradle 23 can oscillate about the vertical oscillating axis X.

The cylindrical seating 232 in fact divide the intermediate part 230 into a front portion 230a and a rear portion 230b.

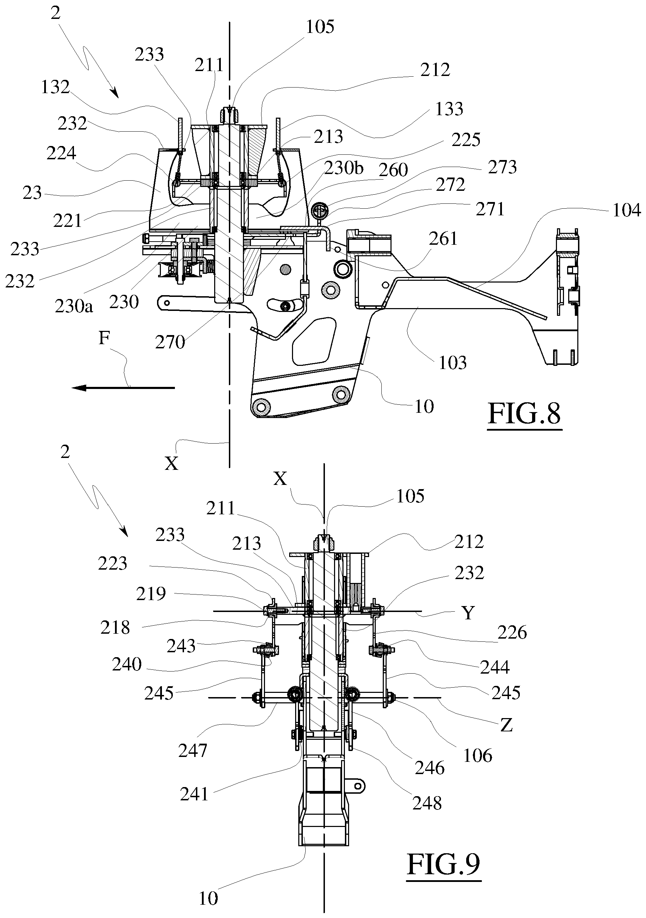

In the embodiment shown in the figures (figure 8) the front portion and the rear portion 230a and 230b of the intermediate part 230 exhibit different heights with respect to a substantially parallel direction to the vertical axis X, for example the front part 230a has a greater height with respect to the rear part 230b.

The intermediate part 230 further comprises a central rising provided with an upper broadened end 233, in which the upper end of the cylindrical seating 232 opens.

The broadened end 233 can be solidly fixed to the lower plate 213 of the first body 210, coaxially with respect thereto.

In practice, the first body 210 defined by the assembly of the cradle 23 and the cylindrical sleeve 211 with the upper and lower plates 212,213, oscillates as a single piece about the vertical oscillating axis X.

The broadened end 233 further comprises a pair of pins 219 arranged with a horizontal axis and coaxial with respect to one another, the pins 219 being arranged in diametrically opposite positions with respect to the vertical oscillating axis X.

Each pin 219 is for example defined by a (threaded) stem projecting laterally from a flank of the broadened end 233 and a broadened head.

The actuating group 2 further comprises at least a second body 220 associated oscillatingly to the first body 210 (which essentially might be constituted even only by a broadened end 233 in its more general function) in oscillation with respect to a first horizontal oscillating axis Y, for example defined by the pins 219.

In particular, the second body 220 is drawn by the first body 210 in oscillation about the vertical oscillating axis X and tilts independently of the first body 210 with respect to the first horizontal oscillating axis Y.

In particular, the second body 220 comprises a plate 221 provided with a central through-hole 222 in which it inserts the first body 210 with an abundant radial play, for example the broadened end 233 of the cradle 23.

The plate 221 is substantially rectangular and can be arranged so as to lie (when in the horizontal position) substantially on the same plane as the broadened end 233 of the cradle 23 of the first body 210.

The second body 220 further comprises a pair of flanges 223 arranged on the edges of the central through-hole 222 in a diametrically opposite position between them and projecting superiorly with respect to the plate 221.

The flanges 223 of the second body 220 are arranged in proximity of the opposite edges of the plate 221, for example in a median zone thereof.

Each flange 223 of the second body 220 comprises a circular hole and can be inserted by a respective pin 219, in particular between the head of the pin 219 and the edge of the respective cylindrical seating 218, so as to associate the second body 220 in oscillation about the first horizontal oscillating axis Y to the first body 210.

The first horizontal oscillating axis Y, in particular, belongs to a median plane of the first body 210 and the second body 220.

The plate 221 of the second body 220 further comprises a pair of eyelets 224,225, each arranged at an opposite transversal edge of the plate 221, not interested by the flange 223.

Each eyelet 224,225 can enable fixing the end of a respective manoeuvring cable 132,133 of the handlebar 13.

In particular the plate 221 of the second body 220 comprises a front eyelet 224 arranged at the front edge of the plate 221, with reference to the advancement direction F, enabling the fixing of the first manoeuvring cable 132 for controlling the forwards motion of the machine 1 (as will be more fully described in the following), and comprises a rear eyelet 225 arranged at the rear edge of the plate 221, with reference to the advancement direction F, enabling the fixing of the second manoeuvring cable 133 for controlling the reverse motion of the machine 1 (as will be described in the following).

The second body 220 further comprises a pair of triangular parts 226 that are parallel and fixed to the plate 221 and project inferiorly with respect thereto, for example each prolonging a flange 223 on the opposite side of the plate 221.

The second body 220 can advantageously be made in a single piece, for example by bending an appropriately profiled metal sheet.

The second body 220, during the oscillation with respect to the first horizontal oscillating axis Y, is able to enter into contact with the intermediate part 230 of the cradle 23, and in particular the upper edge thereof, which is able to define an endrun element for the movement of the second body 220 with respect to the first body 210.

In particular, the second body 220, during the oscillation with respect to the first horizontal oscillating axis Y, is able to enter into contact selectively with the upper edges of the rear and front portions 230b,230a of the intermediate part 230 of the cradle 23, which respectively define a first and a second endrun position of the second body.

In greater detail, the second body 220 is able to oscillate between a rest position in which the plate 221 is substantially horizontal and a first and a second endrun position in which the transversal edges (provided with the eyelets 224,225) are in contact respectively with the upper edge of the intermediate part 230 of the cradle 23.

The second body 220 is able to perform an oscillation with respect to the first oscillating horizontal axis Y between the rest position and the second endrun position, in which the plate 221 is in contact with the rear portion 230b of the intermediate part 230, comprised between 20° and 30°, for example 25°, with respect to the rest position.

The second body 220 is further able to perform an oscillation with respect to the horizontal axis Y between the rest position and the second endrun position, in which the plate 221 is in contact with the front portion 230a of the intermediate part 230, comprised between 8° and 16°, for example 12.5°, with respect to the rest position.

The actuating group 2 further comprises a stop element 26 of the oscillation of the first body 210 (and the second body 220) about the vertical oscillating axis X, which stop element 26 is configured such as to define a first and a second endrun position of the first body 210 with respect to the frame.

In the embodiment illustrated in the figures, the stop element 26 comprises a profiled bar (rigid) conformed substantially in an L-shape and which comprises a first portion 260 solidly associated to the cradle 23 (for example to the intermediate part 230 of the cradle 23) and arranged substantially horizontally, and a second portion 261 extending inferiorly with respect to the first portion 260 and located internally of the space between the lateral flanks 103 of the frame 10.

In practice, the second portion 261 of the stop element 26 is able to come selectively into contact with the internal surfaces of the lateral flanks 103 of the frame 10 during the oscillation, respectively rightwards or leftwards, of the first body 210 with respect to the frame 10, defining the first and the second endrun position for the first body 210.

In greater detail, the stop element 26 can limit the oscillation of the first body 210 about the vertical oscillating axis X to a value comprised between ±2° and ±8°, preferably ±5°, with respect to a rest position, of the first body 210, where the longitudinal axis of the intermediate part 230 of the cradle 23 is substantially parallel to the longitudinal direction of the frame 10 and wherein the first horizontal rotation axis Y is substantially parallel to the rotation axis of the hubs 122.

The actuating group 2 further comprises a recall element 27 of the first body 210 from the first and/or second endrun position (or any intermediate operating position) to the rest position.

In the embodiment shown in the figures, the recall element 27 comprises a substantially scissors-shaped element which comprises a pair of arms 270 (each for example L-shaped) having an end hinged to the frame 10 and an opposite free end.

Each arm 270 is provided with a first part 271 arranged substantially horizontal and having a first end hinged to the frame 10, for example to the cylindrical stem 105, and a second free end which develops risingly to define a second part 272 perpendicular to the first part 271 having a free end.

In particular, each arm 270 is able to oscillate about the vertical oscillating axis X (or a parallel vertical axis) from a rest position in which it is arranged with the axis perpendicular to the axis of the hubs 122 to an endrun position in which it is distanced from the other arm 270.

The arms 270 of the recall element 27 are arranged flanked to one another and each is able to flank the stop element 26 so that the second parts 272 project posteriorly with respect to the first body 210.

Further, each arm 270 is arranged in such a way that the first part 271 is located at an intermediate height between the upper edge of the respective lateral flank 103 and the first portion 261 of the stop element 26.

Further, the second portion 261 of the stop element 26 projects posteriorly with respect to the second parts 272 of the arms 270 of the recall element 27. The recall element 27 further comprises an elastic body defined for example by a spring 273 (for example a traction spring, preferably helical) which is associated at the longitudinal ends thereof to the free ends of the second parts 272 of the arms 270.

In practice, the stop element 26 and the recall element 27 are arranged with respect to one another so that during the oscillating of the first body 210 (about the vertical oscillating axis X) from the rest position to an operating position, the stop element 26 presses against one of the arms 270 of the recall element 27, forcing it to rotate about the hinge axis thereof in opposition to the action of the spring 273, while the other arm 270 of the recall element 27 remains stationary in the rest position thereof (in abutment against the frame 10), bringing the spring 273 into traction.

In this way, when the force is interrupted, by effect of the elastic return of the spring 273, the first body 210 oscillates in the opposite direction from the operating position up to the equilibrium position defined by the rest position. Naturally the spreading of the arms 270 of the recall element 27 might be obtained also using different means to the stop element 26, for example it might be obtained by means of one or more pins solidly constrained to the first body 210.

The actuating group 2 comprises a first and a second hinged arm 24 able respectively to connect the first body 210 to a respective control lever 121 of the actuators 120.

In particular, each hinged arm 24 is arranged by a side of a respective lateral flank 103 of the frame 10 to the outside of the frame.

Each hinged arm 24 is defined by three portions hinged to one another, of which a first and a second end portion 240,241 and an intermediate portion 242.

The first portion 240 of each hinged arm 24 is provided with a first end 243 hinged to the second body 220 and the second portion 241 is provided with a respective first end 249 hinged to a respective control lever 121 of the actuators 120.

Each first portion 240 is substantially rigid with a straight longitudinal axis. The first end 243 of each first portion 240 is hinged to a respective triangular part 226 in an offset position with respect to the hinge axis between the first and the second body 210,220 defined by the first horizontal oscillating axis Y. Each first end 243 of the first portions 240 is hinged to the respective triangular part 226 by means of a spherical joint 28.

The spherical joint 28 for example is such as to compensate the oscillations with respect to a perpendicular plane to the oscillating axis of the control levers 121 due to the oscillation of the first body 210 with respect to the vertical oscillating axis X.

The first portion 240 of each hinged arm 24 further comprises a second end 244 hinged to the intermediate portion 242, for example in proximity of a first end part 245 of the intermediate part.

For the same aims as mentioned in the foregoing, the second end 244 of each first portion 240 is hinged to the respective intermediate portion 242 by means of a further spherical joint 28.

Further, in the example illustrated in the figures, the second end 244 of each first portion 240 of the hinged arms 24 is facing towards the rear portion of the frame 10.

The second portion 241 of each hinged arm 24 is also substantially rigid with a straight longitudinal axis.

The first end 249 of each first portion 241 is hinged to a respective control lever 121 in an offset position with respect to the hinge axis between the control lever 121 and the casing of the respective actuator 120.

The second portion 241 of each hinged arm 24 further comprises a second end 248 hinged to the intermediate portion 242, for example in proximity of a second end part 246 of the intermediate portion 242 opposite to the end part hinged to the first portion 240.

Further, in the example illustrated in the figures, the first end 249 of each second portion 241 of the hinged arms 24 is facing towards the front portion of the frame 10.

The intermediate portion 242 of each hinged arm 24 is substantially rigid and provided with a longitudinal axis that is substantially straight or curved and is hinged to the frame 10 at a central intermediate zone thereof between the end parts 245,246 hinged respectively to the first portion 240 and the second portion 241, preferably a median zone.

In particular the intermediate portion 242 of each hinged arm 24 comprises an annular or cylindrical seating, for example a cylindrical sleeve 247 insertable on a respective cylindrical shank 106 of the frame 10, with possibility of oscillation with respect to a second horizontal oscillating axis Z parallel to the rotation axis of the hubs 122, defined by the axes of the cylindrical shanks 106 and without possibility of axial de-insertion.

The cylindrical shank 247 of each intermediate portion 242 in fact divides the intermediate portion 242 into the first and second end parts 245,246.

In practice, in the example illustrated in the figures, the first and the second end part 245,246 of each intermediate portion 242 lie (parallel to one another) on parallel planes distanced from one another along the second horizontal oscillation axis Z (fixed at the opposite ends of the cylindrical sleeve 247).

For example, the first end part 245 is distal with respect to the frame 10 while the second end part 246 is proximal with respect to the frame 10.

In practice, each hinged arm 24 is such that in use, a movement of the respective first portion 240 corresponds to a movement of the first or second body 210,220 with respect to the frame 10 (for example a sliding with respect to the longitudinal axis thereof), which in turn actuates the respective intermediate portion 242 in oscillation about the second horizontal oscillating axis Z causing a movement of the respective second portion 241, for example in an opposite direction with respect to the first portion 240 (for example a sliding with respect to the longitudinal axis thereof).

The functioning of the machine 1 and the actuating group 2 as described in the foregoing are as follows.

Once the motor 100 of the machine 1 has been actuated, in order to engage the forward movement of the machine 1 it is sufficient for the operator to actuate the manoeuvring the lever 131 in a predetermined direction, for example forwards. In this way, a manoeuvring cable, for example the first manoeuvring cable 132, is drawn so as to raise the end of the second body 220, to which the traction cable is fixed, in an upwards direction.

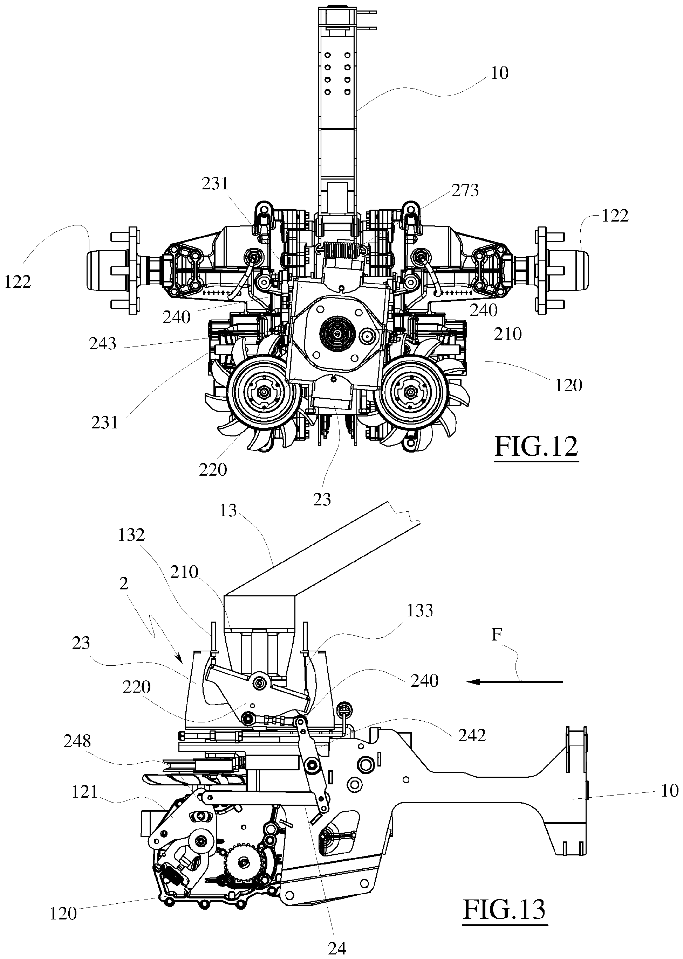

By pulling the first manoeuvring cable 132 (see figure 13) the second body 220 is actuated in oscillation with respect to the first body 210 about the first horizontal oscillating axis Y so as to raise the front portion thereof. By effect of the oscillating of the second body 220 with respect to the first body 220, the first portions 240 of both the hinged arms 24 perform a sliding in a same direction towards the front portion of the frame 10, causing the oscillating of the respective intermediate portions 242 about the second horizontal oscillating axis Z and the consequent sliding in the same direction of the respective second portions 241 towards the rear portion of the frame 10. The displacement in the same direction of the second portions 241 of the hinged arms 24 causes, therefore, the displacing of the control levers 121 from the neutral position to a first front end position, consequently starting the forwards movement of the respective actuators 120.

The rotation velocity during motion imparted on the hubs 122 by the actuators 120 is proportional to the rotation angle imparted on the control levers 12.

During the forwards motion of the machine 1, the operator can rotate the handlebars 13 with respect to the frame 10 (see figure 12), so as to modify the advancement trajectory of the machine and perform a steering action. By rotating the handlebars 13, the operator causes a rotation of the first body 210 (and consequently the second body 220) with respect to the frame 10 about the vertical oscillating axis X, taking it from the rest position into one of the operating positions thereof. By effect of the oscillation of the first body 210 about the vertical oscillating axis X, a differently-directed movement is generated of the first portions 240 (and consequently of the second portions 241) of the hinged arms 24 which actuate the respective control levers 121 of the actuators 120 in different directions.

In particular, the first portion 240 of the hinged arm 24 arranged on the side positioned externally of the curve to be performed slides towards the front portion of the frame 10, causing the oscillating of the respective intermediate portion 242 about the second oscillating horizontal axis Z and the consequent sliding of the respective second portion 241 towards the rear portion of the frame 10, actuating the respective control lever 121 from any position it is in towards the first end position so as to slightly increase the angular rotation velocity of the respective wheel 12. At the same time, the first portion 240 of the hinged arm 24 arranged on the side positioned internally of the curve to be performed slides towards the rear portion of the frame 10, causing the oscillating of the respective intermediate portion 242 about the second oscillating horizontal axis Z and the consequent sliding of the respective second portion 241 nearingly towards the front portion of the frame 10, thus actuating the respective control lever 121 nearingly towards the second end position and distancingly from the first end position, from any position it is in so as to reduce the angular rotation velocity of the respective wheel 12 (at most stopping it or inverting the rotation direction).

The rotation of the handlebars 13 with respect to the vertical oscillating axis X occurs in opposition to the elastic action of the spring 273 of the recall element 27; therefore, once the force that has caused the rotation of the handlebars 13 has been interrupted, the handlebars 13 can return into the rest configuration by effect of the elastic return of the spring 273; in this way the control levers 121 will once more take on the angular position with respect to the neutral position, returning the rotation velocity of the wheels 12 to the same relative velocity and enabling the machine 1 to assume a straight advancement direction.

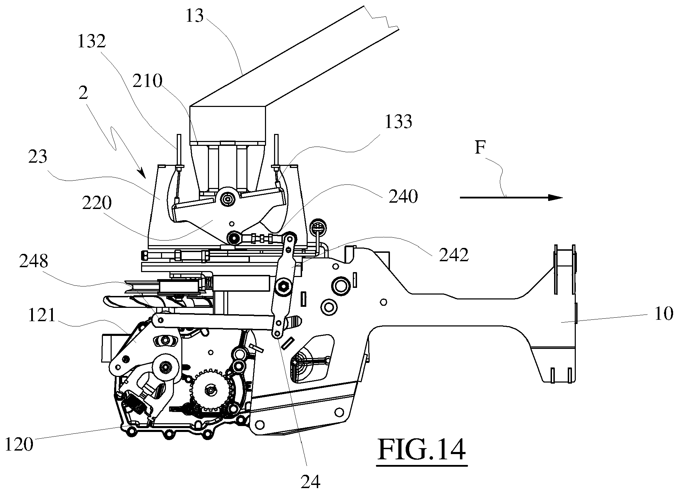

To engage the reverse direction of the machine 1 it is sufficient to actuate the manoeuvring lever 131 in an opposite direction to the direction that engages the advancement direction (see figure 14). In this way, the corresponding second manoeuvring cable 133 is drawn so as to raise the end of the second body 220, to which the manoeuvring cable is fixed.

In particular, by pulling the second manoeuvring cable 133 the second body 220 is actuated in oscillation with respect to the first body 210 about the horizontal oscillating axis Y so as to raise the rear portion thereof.

In an entirely like way to what is described in the foregoing for the forwards advancement, the oscillation of the second body 220 about the first horizontal oscillating axis Y causes a same-directional movement of the hinged arms 24 and, consequently, of the control levers 121 towards the second end position, by inverting the rotation direction of the hubs 122.

As described in the foregoing, the second body 220 oscillates about the first horizontal oscillating axis Y towards the second endrun position with an oscillation range that is smaller with respect to the oscillation towards the first endrun position, so that the run of the control lever 121 towards the second end portion is smaller than the run towards the first end position, so as to enable a greater run than the control levers 121 for the forwards advancement with respect to the reverse motion.

During the reverse motion of the machine 1 the operator can rotate the handlebars 13 about the vertical oscillating axis X with respect to the frame 10 so as to modify the advancement direction of the machine and perform a steering in entirely a same way as described above.

The invention as it is conceived is susceptible to numerous modifications, all falling within the scope of the inventive concept.

Further, all the details can be replaced with other technically-equivalent elements.

In practice the materials used, as well as the contingent shapes and dimensions, can be any according to requirements, without forsaking the scope of protection of the following claims.

## Claims

1. A self-propelling machine (1), comprising:
• a frame (10);
• a pair of actuators (120) each provided with a respective hub (122) coaxial to the other and able to support and actuate in rotation a respective wheel (12), each actuator (120) comprising a control lever (121) that is mobile with respect to the frame (10) between at least a first operating position, in which the actuator (120) actuates the respective wheel (12) in a rotation direction, and at least a second operating position, in which the actuator (120) actuates the respective wheel in the opposite rotation direction;
• an actuating group (2) able to actuate the control lever (121) of each actuator (12), the actuating group (2) being provided with a first body (210,23) associated to the frame (10) and mobile with respect thereto with a single first degree of freedom, and a second body (220) associated to the first body (210) and mobile with respect thereto with a single second degree of freedom and connected to the control levers (121),
**characterized in that** the first degree of freedom of the first body (210) with respect to the frame (10) is a rotation about a vertical axis (X), wherein the second degree of freedom of the second body (220) with respect to the first body is a rotation about an horizontal axis (Y), and wherein the second body (220) is connected to each control lever (121) by means of a respective hinged arm (24) so that any rotation of the first body (210) with respect to the frame (10) about the vertical axis (X) causes a movement of one of the control levers (121) towards the first operating position and a movement of the other of the control levers (121) towards the second operating position, and any rotation of the second body (220) with respect to the first body (210) about the horizontal axis (Y) causes a movement of both the control levers (121) towards the first operating position or the second operating position.

2. The machine (1) of any one of the preceding claims, **characterised in that** each one of the hinged arms (24) has a first end (243) hinged to the second body (2) and a second end (249) hinged to a respective control lever (121), for transfer of the movement of the first and/or the second body (210,220) relative to the frame to the control levers (121).

3. The machine (1) of claim 2, **characterised in that** each hinged arm (24) comprises a first portion (240), provided with the first end, a second portion (241) provided with the second end, and an intermediate portion (242) hinged to the free ends of the first and second portion (240,241), the intermediate portion (242) being hinged to the frame with respect to an oscillating axis (Z) in an intermediate point between the hinge points with the first and the second portion (240, 241).

4. The machine (1) of any one of the preceding claims, **characterised in that** the first body (210) comprises a cylindrical seating (211,232) able to be inserted rotatably on a stem (105) having a vertical axis solidly constrained to the frame (10), the second body (220) being oscillatingly associated to the first body (211) by means of at least a pin (219) having an axis (Y) perpendicular to the axis of the stem (211).

5. The machine (1) of any one of the preceding claims, **characterised in that** the frame (10) comprises two opposite endrun elements (103) selectively able to enter into contact with a stop element (26) solidly constrained to the first body (210) for defining respective stop positions of the first body 210) with respect to the frame (10).

6. The machine (1) of any one of the preceding claims, **characterised in that** the actuating group (2) comprises an elastic recall element (27) associated to the frame (10) and to the first body (210) and wherein the first body (210) is mobile with respect to the frame (10) from a rest position towards a first and a second operating position in opposition to the action of the recall element (27), the rest position being interposed between the first and the second operating position along the trajectory of the first body (210) with respect to the frame (10).

7. The machine (1) of any one of the preceding claims, **characterised in that** it comprises a handlebar (13) fixed to the first body (210) and solidly constrained thereto with respect to the first degree of freedom.

8. The machine (1) of any one of the preceding claims, **characterised in that** it comprises a manoeuvring means (131,132,133) able to activate the second body (220) in movement with respect to the first body (210).

9. The machine of claim 7 and 8, **characterised in that** the manoeuvring means comprise a manoeuvring lever (131) associated to the handlebar (13) and a pair of manoeuvring cables (132,133), each provided with a first end associated to the manoeuvring lever (131) and a second end associated to the second body (2).

## Patentansprüche

1. Selbstfahrende Maschine (1), umfassend:
• einen Rahmen (10);
• ein Paar Aktuatoren (120), die jeweils mit einer entsprechenden Nabe (122) versehen sind, die koaxial zueinander und in der Lage sind, ein entsprechendes Rad (12) zu tragen und in Drehung zu versetzen, jeder Aktuator (120) umfassend einen Steuerhebel (121), der in Bezug auf den Rahmen (10) zwischen mindestens einer ersten Betriebsposition, in der der Aktuator (120) das entsprechende Rad (12) in eine Drehrichtung betätigt, und mindestens einer zweiten Betriebsposition, in der der Aktuator (120) das entsprechende Rad in die entgegengesetzte Drehrichtung betätigt, beweglich ist;
• eine Betätigungsgruppe (2), die in der Lage ist, den Steuerhebel (121) von jedem Aktuator (12) zu betätigen, wobei die Betätigungsgruppe (2) mit einem ersten Körper (210, 23), der dem Rahmen (10) assoziiert und in Bezug auf diesen mit einem einzigen ersten Freiheitsgrad beweglich ist, und mit einem zweiten Körper (220), der mit dem ersten Körper (210) assoziiert und in Bezug auf diesen mit einem einzigen zweiten Freiheitsgrad beweglich ist und mit den Steuerhebeln (121) verbunden ist, versehen ist,
**dadurch gekennzeichnet, dass** der erste Freiheitsgrad des ersten Körpers (210) in Bezug auf den Rahmen (10) eine Drehung um eine vertikale Achse (X) ist, wobei der zweite Freiheitsgrad des zweiten Körpers (220) in Bezug auf den ersten Körper eine Drehung um eine horizontale Achse (Y) ist, und wobei der zweite Körper (220) mittels eines jeweiligen Gelenkarms (24) mit jedem Steuerhebel (121) verbunden ist, sodass eine Drehung des ersten Körpers (210) in Bezug auf den Rahmen (10) um die vertikale Achse (X) eine Bewegung von einem der Steuerhebel (121) in Richtung der ersten Betriebsposition und eine Bewegung des anderen der Steuerhebel (121) in Richtung der zweiten Betriebsposition bewirkt, und eine Drehung des zweiten Körpers (220) in Bezug auf den ersten Körper (210) um die horizontale Achse (Y) eine Bewegung beider Steuerhebel (121) in Richtung der ersten Betriebsposition oder der zweiten Betriebsposition bewirkt.

2. Maschine (1) nach einem der vorherigen Ansprüche, **dadurch gekennzeichnet, dass** jeder der Gelenkarme (24) ein erstes Ende (243) aufweist, das an den zweiten Körper (2) angelenkt ist, und ein zweites Ende (249), das an einen entsprechenden Steuerhebel (121) angelenkt ist, um die Bewegung des ersten und/oder des zweiten Körpers (210, 220) in Bezug auf den Rahmen auf die Steuerhebel (121) zu übertragen.

3. Maschine (1) nach Anspruch 2, **dadurch gekennzeichnet, dass** jeder Gelenkarm (24) einen ersten Abschnitt (240), der mit dem ersten Ende versehen ist, einen zweiten Abschnitt (241), der mit dem zweiten Ende versehen ist, und einen Zwischenabschnitt (242), der an den freien Enden des ersten und zweiten Abschnitts (240, 241) angelenkt ist, umfasst, wobei der Zwischenabschnitt (242) in Bezug auf eine Schwenkachse (Z) an einem Zwischenpunkt zwischen den Gelenkpunkten mit dem ersten und dem zweiten Abschnitt (240, 241) an dem Rahmen angelenkt ist.

4. Maschine (1) nach einem der vorherigen Ansprüche, **dadurch gekennzeichnet, dass** der erste Körper (210) einen zylindrischen Sitz (211, 232) umfasst, der drehbar auf einem Schaft (105) mit einer vertikalen Achse eingesetzt werden kann, der fest am Rahmen (10) befestigt ist, wobei der zweite Körper (220) mittels mindestens eines Stifts (219) mit einer Achse (Y) senkrecht zur Achse des Schafts (211) oszillierend mit dem ersten Körper (211) assoziiert ist.

5. Maschine (1) nach einem der vorherigen Ansprüche, **dadurch gekennzeichnet, dass** der Rahmen (10) zwei gegenüberliegende Endstücke (103) umfasst, die selektiv mit einem Anschlagelement (26) in Kontakt kommen können, das fest an dem ersten Körper (210) befestigt ist, um jeweilige Anschlagpositionen des ersten Körpers (210) in Bezug auf den Rahmen (10) zu definieren.

6. Maschine (1) nach einem der vorherigen Ansprüche, **dadurch gekennzeichnet, dass** die Betätigungsgruppe (2) ein elastisches Rückholelement (27) umfasst, das mit dem Rahmen (10) und dem ersten Körper (210) assoziiert ist und wobei der erste Körper (210) in Bezug auf den Rahmen (10) aus einer Ruheposition in eine erste und eine zweite Betriebsposition entgegen der Wirkung des Rückholelements (27) beweglich ist, wobei die Ruheposition zwischen der ersten und der zweiten Betriebsposition entlang des Verlaufs des ersten Körpers (210) in Bezug auf den Rahmen (10) zwischengestellt ist.

7. Maschine (1) nach einem der vorherigen Ansprüche, **dadurch gekennzeichnet, dass** sie einen Lenker (13) umfasst, der an dem ersten Körper (210) befestigt und mit Bezug auf den ersten Freiheitsgrad fest daran befestigt ist.

8. Maschine (1) nach einem der vorherigen Ansprüche, **dadurch gekennzeichnet, dass** sie eine Manövriereinrichtung (131, 132, 133) umfasst, die in der Lage ist, den zweiten Körper (220) in Bezug auf den ersten Körper (210) in Bewegung zu versetzen.

9. Maschine nach Anspruch 7 und 8, **dadurch gekennzeichnet, dass** die Manövriereinrichtungen einen Manövrierhebel (131), der mit dem Lenker (13) assoziiert ist, und ein Paar Manövrierseilzüge (132, 133), die jeweils mit einem ersten Ende, das mit dem Manövrierhebel (131) assoziiert ist, und einem zweiten Ende, das mit dem zweiten Körper (2) assoziiert ist, versehen sind.

## Revendications

1. Machine autopropulsée (1), comprenant :
• un cadre (10) ;
• une paire d'actionneurs (120) chacun doté d'un moyeu respectif (122) coaxial à l'autre et apte à soutenir et à actionner en rotation une roue (12) respective, chaque actionneur (120) comprenant un levier de commande (121) qui est mobile par rapport au cadre (10) entre au moins une première position de fonctionnement, dans laquelle l'actionneur (120) actionne la roue (12) respective dans une direction de rotation, et au moins une seconde position de fonctionnement, dans laquelle l'actionneur (120) actionne la roue respective dans la direction de rotation opposée ;
• un groupe d'actionnement (2) apte à actionner le levier de commande (121) de chaque actionneur (12), le groupe d'actionnement (2) étant doté d'un premier corps (210, 23) associé au cadre (10) et mobile par rapport à ce dernier avec un premier degré de liberté unique et d'un second corps (220) associé au premier corps (210) et mobile par rapport à ce dernier avec un second degré de liberté unique et connecté aux leviers de commande (121), **caractérisée en ce que**
le premier degré de liberté du premier corps (210) par rapport au cadre (10) est une rotation autour d'un axe vertical (X), dans laquelle le second degré de liberté du second corps (220) par rapport au premier corps est une rotation autour d'un axe horizontal (Y) et dans laquelle le second corps (220) est connecté à chaque levier de commande (121) au moyen d'un bras articulé (24) respectif de sorte que toute rotation du premier corps (210) par rapport au cadre (10) autour de l'axe vertical (X) provoque un mouvement de l'un des leviers de commande (121) vers la première position de fonctionnement et un mouvement de l'autre levier de commande (121) vers la seconde position de fonctionnement et que toute rotation du second corps (220) par rapport au premier corps (210) autour de l'axe horizontal (Y) provoque un mouvement des deux leviers de commande (121) vers la première position de fonctionnement ou vers la seconde position de fonctionnement.

2. Machine (1) selon l'une quelconque des revendications précédentes, **caractérisée en ce que** chacun des bras articulés (24) possède une première extrémité (243) articulée sur le second corps (2) et une seconde extrémité (249) articulée sur un levier de commande (121) respectif pour le transfert du mouvement du premier et/ou du second corps (210, 220) par rapport au cadre vers les leviers de commande (121).

3. Machine (1) selon la revendication 2, **caractérisée en ce que** chaque bras articulé (24) comprend une première partie (240), dotée d'une première extrémité, une seconde partie (241) dotée de la seconde extrémité et une partie intermédiaire (242) articulée sur les extrémités libres de la première et de la seconde parties (240, 241), la partie intermédiaire (242) étant articulée sur le cadre par rapport à un axe d'oscillation (Z) en un point intermédiaire entre les points d'articulation avec la première et la seconde parties (240, 241).

4. Machine (1) selon l'une quelconque des revendications précédentes, **caractérisée en ce que** le premier corps (210) comprend un logement cylindrique (211, 232) apte à être inséré en rotation sur une tige (105) possédant un axe vertical solidement contraint au cadre (10), le second corps (220) étant associé en oscillation au premier corps (211) au moyen d'au moins une cheville (219) possédant un axe (Y) perpendiculaire à l'axe de la tige (211).

5. Machine (1) selon l'une quelconque des revendications précédentes, **caractérisée en ce que** le cadre (10) comprend deux éléments de fin de course (103) opposés sélectivement aptes à entrer en contact avec un élément de butée (26) solidement contraint au premier corps (210) pour la définition de positions de butée respectives du premier corps (210) par rapport au cadre (10).

6. Machine (1) selon l'une quelconque des revendications précédentes, **caractérisée en ce que** le groupe d'actionnement (2) comprend un élément de rappel élastique (27) associé au cadre (10) et au premier corps (210) et dans laquelle le premier corps (210) est mobile par rapport au cadre (10) à partir d'une position de repos vers une première et une seconde positions de fonctionnement en opposition à l'action de l'élément de rappel (27), la position de repos étant interposée entre la première et la seconde positions de fonctionnement le long de la trajectoire du premier corps (210) par rapport au cadre (10).

7. Machine (1) selon l'une quelconque des revendications précédentes, **caractérisée en ce qu'**elle comprend une poignée (13) fixée sur le premier corps (210) et solidement contrainte à ce dernier par rapport au premier degré de liberté.

8. Machine (1) selon l'une quelconque des revendications précédentes, **caractérisée en ce qu'**elle comprend des moyens de manœuvre (131, 132, 133) aptes à activer le second corps (220) en mouvement par rapport au premier corps (210).

9. Machine selon la revendication 7 et 8, **caractérisée en ce que** les moyens de manœuvre comprennent un levier de manœuvre (131) associé à la poignée (13) et une paire de câbles de manœuvre (132, 133), chacun doté d'une première extrémité associée au levier de manœuvre (131) et d'une seconde extrémité associée au second corps (2).
